# EUROPEAN PATENT APPLICATION

(11) **EP 1 215 659 A1**
(43) Date of publication of application: **19.06.2002**
(21) Application number: 00127451.3
(22) Date of filing: 14.12.2000
(51) Int. Cl.: G10L 15/26

(54) **Locally distibuted speech recognition system and method of its operation**

(71) Applicant: Nokia Corporation, 02150 Espoo (FI)
(72) Inventor: Koenig, Jens, 44793 Bochum (DE); Kunze, Klaus, 44793 Bochum (DE)
(74) Representative: Becker Kurig Straus

(57) **Abstract**

The present invention relates to a locally distributed speech recognition system for converting spoken language into digitized readable text for a mobile communication device, characterised in that it comprises a preliminary recognition means located in said mobile communication device and an interpreting means located remote from said mobile communication device and connected via a transmission facility with said mobile communication device.

## Description

The invention relates generally to a distributed speech recognition system. It also relates generally to a speech recognition system for the use in a cellular phone network. In particular the present invention relates to speech recognition system for the input of short messages. In further detail the present invention is related to a speech recognition system in a cellular phone network for transmitting short speech messages without the use of speech transmission channels.

The spread of cellular phones and the large scale integration of electronic devices in the recent years have led to a wide spread use of a telematic service called short message service (SMS). This service is used to transfer short messages from one cellular phone to another. It is also possible to transfer a short message to an e-mail address. Short messages (SM) presently used in the Global System for Mobile communication (GSM) cellular phone network comprise a maximum quantity of 160 characters. By chaining up several short messages even longer texts can be transferred via a SMS.

The standard procedure to input SM in a GSM-phone is to use the keyboard. The use of a standard GSM-phone keyboard is time consuming and requires the whole attention of the user. Even the use of an input routine, such as the T9-logic, does not obviate these drawbacks. In case the SM is spoken, the input time and the user's attention could be considerably reduced.

Currently used speech recognition systems are not operable in cellular phones, due to insufficient processing power, battery capacity, etc.

Standard speech recognition systems capable of converting spontaneous speech into written text and known as "Large Vocabulary Continuous Speech Recognition (LVCSR) systems" require huge storage capacity and complex computing devices. Such systems can not be integrated in a single cellular phone.

Conventional speech recognition systems are developed to attain a reliable conversion of spontaneous speech into written text. One approach is to increase the accuracy of the single steps in a speech recognition system. Conventional speech recognition systems consist of a subdevice for phoneme recognition, and a subdevice for word recognition, which devices are closely connected. A phoneme is one of a group of distinctive sounds that make up a word of a language. It is supposed that a phoneme recognition system is capable of recognising intervals, too. The major approach is to reach complete accuracy in both the phoneme recognition and the word recognition process.

Conventional phoneme recognition systems use adaptive interactive neuronal networks, that have to be trained for an accurate recognition of phonemes. Other phoneme recognition systems use modular time delay neuronal networks. While these systems have been considerably improved over the last years, the accuracy is limited to 80 percent consistency. A background reference is "Speaker-independent phoneme recognition using large scale neuronal networks" by Nakamura, S .; Sawai, H.; Sugiyama, M. Acoustic, Speech, and Signal Processing, 1992", ICASSP-92.; in 1992 IEEE International Conference , Volume: 1,1992, Pages 409-412, vol.1

Most efforts to increase the accuracy employ a tight feedback between the phoneme and the word recognition system. That includes that the phoneme recognition and the word recognition may be integrated in a single system. These efforts imply that the complexity of the speech recognition device heavily increases, while the accuracy does not increase correspondingly.

It may be possible to transmit a speech signal from a cellular phone via a speech channel directly to a centralised speech recognition system. Such a centralised conventional speech recognition system can not be used, however, in a GSM cellular phone network due to the transfer procedure of coding, transmitting and decoding, wherein important characteristics of the speech signal get lost. Additionally the bandwidth of the speech transmission channels is limited. The bandwidth of the transmission channels is formed by a band pass filtering effect. High and low frequencies of the speech are not transmitted via the transmission channels. The speech recognition system however requires to be supplied with these frequencies. The loss of important characteristics and the restricted bandwidth of the transmission leads to an unacceptable loss in speech recognition accuracy, so this procedure of converting a speech signal into readable text is not useful.

Hence, a speech recognition system having a good accuracy can not be integrated in a cellular phone, due to its complexity, space demand and battery load.

One approach in order to solve the problem of a cellular phone based speech recognition system is recited in WO 00/22610. This document describes in particular the disadvantages of a speech recognition system integrated in a cellular phone. It also describes the drawbacks of a speech recognition system due to the bandwidth of the GSM. It further describes a method of feature extracted parameter compression for the transfer of speech to a speech recognition system. The described apparatus and method use a speech channel for the transmission of feature extracted parameters of the speech waveform. The feature extracted parameters are transferred to a speech recognition system. The speech recognition comprises a phoneme and a word recognition system. The prevailing drawback of this system is the requirement of a whole speech channel for the transmission between the mobile communication device and the interpreting means, the need for a new transmission protocol and the requirement for continuous power amplifier operation.

The problem underlying the invention is to find a method and an apparatus for a speech recognising system adapted for the speech input of short messages into a cellular or mobile phone communication network.

Further, it is desired to simplify the system and to increase the speed of the input process. The problem is solved by a locally distributed speech recognition system according to claim 1.

According to another aspect the problem is solved by an interpreting means according to claim 16.

According to yet another aspect the problem is solved by a mobile communication device according to claim 17.

Methods for operating the above devices are subject of claims 20 and 23.

The speech recognition according to the invention is split into a preliminary recognition means integrated in a mobile communication device, a transmission facility and a remote interpreting means. The transmission facility connects the mobile communication device to the interpreting means and vice versa.

The transmission facility can be a cellular phone network, a Global System for Mobile Communication (GSM) network, a Universal Mobile Telecommunication System (UMTS) network, the internet, the World Wide Web, or other wide area networks. It could also be a local area network as an intranet, or a short distance transmission system between a computer and a peripheral device, e.g. a Bluetooth™ system. The mobile communication device can be a cellular phone with a short message feature as well as a mobile computer with a connection to a network. The transferring code could be a text format such as ASCII or the code used in the Short Message System of GSM networks, or any other text code.

In a preferred embodiment of the invention the mobile communication device comprises a digital signal processing means being connected to the preliminary recognition means. By using the preliminary recognition means in a mobile communication device, the preliminary recognition process can be supported by a digital speech waveform processing means. Especially in cellular phones a digital signal processing means (DSP) can be included in the transceiver of the cellular phone. In addition the preliminary code can be compressed to reduce its length.

Advantageously the locally distributed speech recognition system provides means for the re-transmission of the digitized readable text back to the user, wherein said re-transmission means being connected to said interpreting means.

Preferably the preliminary recognition system comprises a neural or neuronal network or a time delay neuronal network. By using a neuronal network or a time delay neuronal network in the preliminary recognition system, the best suited computing structure is chosen to solve the problem of speech recognition as effectively as possible. The preliminary recognition means preferably comprises phoneme recognition means for generating phonemes out of spoken language.

Advantageously said neuronal network is interactively adaptive and/or comprises a modular structure. By using an adaptive interactive neuronal network, the user can adapt his personal mobile communication device to his personal pronunciation. Thus, the accuracy of the preliminary recognition can be improved. By using a modular neuronal network the best accuracy in preliminary recognition is attained.

Conveniently the mobile communication device, the preliminary recognition system and/or the interpreting means comprise conversion means for converting between different codes, e.g. ASCII, SMS, etc. By using a conversion means, any transmission problems due to transfer protocols or differing codes in information exchange can be solved.

Preferably the preliminary recognition means, the mobile communication device and/or the interpreting means comprise storage means. By using storage means, the locally distributed speech recognition system is able to transfer the recognised phonemes during speech intervals. This reduces the operation time of the transmitter of the mobile communication device to a minimum. Using a buffer between the speaker and the preliminary recognition means enables the system to continuously recognise phonemes, and to transfer and receive the code during speech intervals.

Advantageously the code transfer between the mobile communication device and the interpreting means is achieved by a teleservice. Conveniently the used teleservice is a short message system.

By using a teleservice the locally distributed speech system can be used by a cellular phone service provider for an easier and faster way of generating short messages. The providers of cellular phone networks benefit from a increased amount of short messages. The teleservice can be a facsimile, short message system (SMS), General Packet Radio Service, or any other not yet introduced teleservice capable of transferring text.

Preferably the interpreting means is directly connected to or included in a network. It can be connected to an SMS central station.

By connecting the interpreting means with a network, a plurality of mobile communication devices can use a single interpretation device. This enables the installation of a central speech recognition system in cellular phone networks, to comply with the requirement of low costs for the single user connected to the central speech recognition system.

In an alternative embodiment the interpreting means is delocalised in the network. By using delocalised interpreting means the provider of a network benefits from the fact that even in a case of a failure or a breakdown of a single interpreting means the speech recognition system maintains operation.

Conveniently the interpreting means comprises a word recognition means.

Preferably the interpreting means comprise a grammar recognition means.

Advantageously the interpreting means comprise a syntax recognition means. By using word, grammar, and syntax recognition systems, which are preferably connected to each other, the interpreting means can generate possible interpretations from defective preliminary codes. For generating short messages with less than 160 characters this can be a powerful means for the speech recognition. Due to the brevity of the message, the used words, grammar and syntax are less complex than in ordinary speech and the preceding preliminary recognition proves satisfactory in association with such interpreting means.

Advantageously the means for the transfer of data is designed to transfer the data in accordance to a transfer protocol, especially that of the short message system.

By using the short message system transfer protocol the system can be used in existing GSM cellular phone networks. The main advantage is that the system can be used world wide, because the GSM standard is used world wide.

Preferably the interpreting means uses a discrete hidden markov model for interpreting the received coded phonemes. By using a discrete hidden markov model a suitable word recognition system is used for the word recognition.

According to an other aspect of the invention the speech recognition is achieved by an interpreting means for use in a locally distributed speech recognition system comprising an input for receiving digitally coded phonemes from a remote preliminary recognition means, an output for digital coded readable text, and databases for orthography, grammar and syntax.

According to an other aspect of the invention the speech recognition is achieved by a mobile communication device for the use in said locally distributed speech recognition system comprising an acoustic coupler for transferring an acoustic voice waveform into an electronic waveform, a preliminary recognising means for extracting phonemes contained in this waveform, a converting means for converting the extracted phonemes into code and a transmitting means for transmitting the code.

A preferred embodiment of a mobile communication device according to the invention further comprises means to receive data transferred from the interpreting means. This enables the user to verify the recognized text for accuracy.

According to an other aspect of the invention a method for operating a locally distributed speech recognition system for the use with a transmission facility comprises the steps of
- Recognising the phonemes and intervals of the speech
- Converting the phonemes and intervals into code
- Transferring the code to a remote interpreting means
- Interpreting the code to generate digitised readable text

After recognising the phonemes and intervals in the mobile communication device, the phonemes are converted into code. The code is transferred via a transmission facility to a remote interpreting means. The transmission facility can be a communication network such as the internet or cellular phone networks. The interpreting means generates readable text from the code.

Preferably the method further comprises one of the following steps of
- Supporting the recognising process by digitally processing the waveform of the speech input
- Storing the code
- Limiting the number of recognised phonemes to a predetermined amount
- Generating a short message containing the phonemes.

By supporting the preliminary recognition process with a digital signal processor, the accuracy of the recognition process may be improved. Digital signal processors are included in transceivers of conventional mobile communication devices used in GSM cellular phone networks. During the preliminary recognition process, the mobile communication device has to be idle, to prevent self interfering. Hence the transceiver of the mobile communication device is in an idle mode during the preliminary recognition process. Therefore the digital signal processor can be used to process the speech waveform during preliminary recognition. A short time delay means upstream of the preliminary recognition means can detect speech intervals that can be used to transfer the code via short message system to the interpreting device. By counting the phonemes in the mobile communication device, the system can communicate to the user that the length of a short message was exceeded. By limiting the number of recognised characters, the user can select whether his short message should be sent in one, or several short message packets to the recipient. The code has to be stored for continuous preliminary recognition and simultaneous transmission to the interpreting means. Generating a short message from the code enables the mobile communication device to use a non-speech channel for the transmission to the interpreting means. The short message can contain a code sequence identifying the subsequent characters as phonemes.

Preferably the method further comprises at least one of the following steps of:
- Transferring the digitised readable text to the user;
- Storing said digitised readable text,
- Verifying and in case Rejecting the digitised readable text by the user,
- Dispatching a rejection signal,
- Receiving a rejection signal by the interpreting means;
- Re-Interpreting the code to generate a different digitised readable text,
- Accepting the digitised readable text by the user,
- Post-Processing of an accepted digitised readable text by the user,
- Storing said post processed digitised readable text,
- Dispatching said digitised readable text or said post-processed digitised readable text by the user,
- Transferring a command from the user to the interpreting means for dispatching an accepted digitised readable text to a recipient.
- Dispatching an accepted digitised readable text to a recipient.
- Receiving and storing information related to the origin of the code for improving the interpreting process,
- Receiving and storing the accepted and/or post-processed digitised readable text for updating the databases .
- Processing of stored data for improving the accuracy of the interpreting process.

By transferring the digitised readable text back to the user, he can check whether the recognised text is in accordance with the spoken text. If the readable text diverges too much from the spoken text the user can send a rejection signal to the interpreting means. The rejection signal causes the interpreting means to restart interpretation and to generate a differing readable text from the code. This procedure is repeated until a readable text is accepted. This text can be sent to a recipient. It may be sufficient, to transfer a dispatching command to the interpreting means. If the readable text diverges slightly from the spoken text, the user may accept the text, post-process the text and send it to a recipient.

By transferring a post-processed short message back to the interpreting means the interpretation accuracy may be improved significantly. Especially the recognition of names and nicknames can be improved, if the interpreting means uses this information related to the original phoneme code. The system may be capable to recognise all names by the help of information relating to the origin and the address of the short message.

According to an other aspect of the invention a method is provided for operating an interpreting means for the use with a transmission facility comprising the steps of:
- Receiving coded phonemes from a remote mobile communication system
- Interpreting the code to generate digitised readable text in accordance with predetermined rules;
- Dispatching said digitised text to said mobile communication device.

Preferably the method further comprises at least one of the following steps of:
- Storing the code
- Storing the digitised readable text
- Transferring the digitised readable text to the recipient;
- Storing the information related to the origin of the code;
- Receiving and storing the rejected, accepted and/or post processed digitised readable text;
- Processing of the stored data to improve the interpretation process.

Advantageously the interpretation of the code is supplemented in accordance with orthography, grammar, and/or syntax.

By using orthography, grammar and syntax databases, the interpreting means may be capable to interpret garble code. The accuracy of the interpretation process may be improved. It may be necessary to use a special orthography, grammar and syntax, due to the shortness of the messages.

Preferably the interpretation of the code is executed in accordance with orthography, grammar and syntax of the of a specific language selected by the user.

By using orthography, grammar and syntax of a specific language, selected by the user, the system can be used by tourists, to generate short messages. Especially for the use of the system in multilingual countries, like Switzerland, a language selection can be related to the subscriber identification module (SIM) of the mobile communication device.

Preferably the preliminary recognition means distinguishes vowels, consonants, intervals and probabilities.

By using not only the phonemes as an input, but also intervals, the accuracy of the recognition process may be improved. Further improvement may be reached, if the accuracy of the recognition of each phoneme is quantified as a probability and transmitted to the interpreting means, too. Probabilities may vary from zero which is "not recognised" to 1.0 which is "surly recognised". In the case that instead of one phoneme a multitude of phonemes with differing probabilities are recognised, only the most probable phoneme will be transferred to the interpreting means. Alternatively, with sufficient data transfer capacities, an algorithm can be used to determine if different phonemes together with their probabilities are transferred to the interpreting means.

For example, if two differing phonemes PH1, with the probability 0,6, and PH2, with the probability 0,9, are recognised, the algorithm only transfers the phoneme PH2. If the preliminary recognition system detects, however, a probability of 0,7 for PH1 and a probability of 0,6 for PH2, it is useful that the algorithm causes both phonemes together with their probabilities to be transferred to the interpreting means. So if the interpreting means can not form a readable text using PH1, it will automatically be replaced by PH2. The algorithm and this kind of transfer procedure economises a closed feedback loop between the preliminary recognition means and the interpreting means.

Preferably the phoneme code is compressed prior to transmittal to the interpreting means.

By compressing the code prior to transmittal, the number of transmitted short messages may be reduced, to prevent the provider or the network from being overloaded. This may be carried out by a system which marks a single phoneme and transfers it together with a position code. So instead of transferring the same phoneme several times, the system transfers the phoneme once followed by a position code. For example the phoneme "PH" is transferred as "PH, phonemeposition 3,6,8" instead of "..PH..PH.PH.." in the short message. Any other compression procedure suitable for short messages can be used.

Further advantages, advantageous embodiments and additional applications of the invention are provided in the following description of a preferred embodiment of the invention in connection with the enclosed figure.

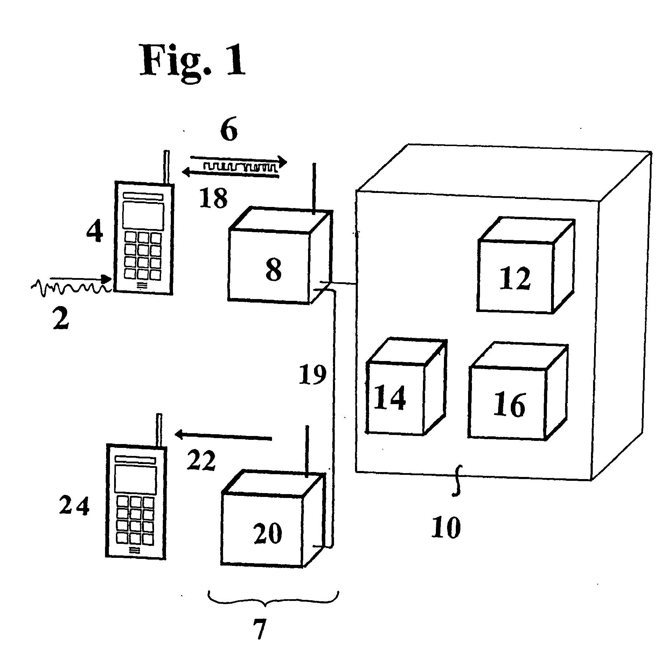

Fig. 1 is a block diagram of a cellular phone network with a distributed speech recognition system to generate short messages according to the invention.

While the following description is in the context of distributed speech recognition systems in cellular phone networks involving portable radio phones, it will be understood by those skilled in the art that the present invention may be applied to other communication networks, especially the Internet, the world wide web or future networks. Moreover the present invention may be used in any speech recognition application like local area networks (LAN).

Figure 1 describes the use of a distributed speech recognition system. Spoken words 2 are received by a microphone disposed in a first mobile communication device 4 and are transformed into coded phonemes in said first mobile communication device 4. The coded phonemes are transferred via a transmission facility 7 to an interpreting means 10. The transmission facility 7 uses a first digital short message radio channel 6 and a first communication network base station 8. The transmission facility 7 is a cellular phone network. The interpreting means 10 receives the coded phonemes and processes them in accordance with an orthography database 12, a grammar database 14 and a syntax database 16. The interpreting means 10 generates a digitised short message signal from the coded phonemes.

If the interpretation of the coded phonemes is equivocal, the interpreting means 10 generates a plurality of possible digitised readable texts. The most similar digitised readable text is sent back to the mobile communication device 4 via the first network base station 8 and a second digital short message radio channel 18. In the first mobile communication device 4 the text is displayed and the user (not shown) accepts or rejects the readable text. If the user rejects the text, a rejection command is issued and retransmitted, whereupon the next possible code interpretation is sent to the user, until the user accepts a readable text. Next, the user dispatches the approved short message via the transmission facility 7 to a receiving mobile communication device 24.

The transmission path extends said mobile communication device 4 via said digital short message radio channel 6 to said base station 8. From the base station 8 the message is conveyed via a dedicated line 19 to a second base station 20. From the second base station 20 the message is sent via a third short message radio channel 22 to the receiving mobile communication device 24. Via this path a spoken message can be transformed into a short message and is sent to another mobile communication device to be read as text.

## Claims

1. A locally distributed speech recognition system for converting spoken language (2) into digitized readable text for a mobile communication device (4), **characterised in that** it comprises a preliminary recognition means located in said mobile communication device (4) and an interpreting means (10) located remote from said mobile communication device (4) and connected via a transmission facility (7) with said mobile communication device (4).

2. A locally distributed speech recognition system as claimed in claim 1, wherein means for the re-transmission of the digitized readable text back to the user are provided, said re-transmission means being connected to said interpreting means (10).

3. A locally distributed speech recognition system according to one of the claims 1 to 2, wherein the mobile communication device (4) comprises a digital processing means connected to said preliminary recognition means.

4. A locally distributed speech recognition system according to one of the claims 1 to 3, **characterised in that** said preliminary recognition means comprises a neuronal network and /or a time delay neuronal network.

5. A locally distributed speech recognition system according to claim 4, **characterised in that** said neuronal network is adaptive and interactive and/or comprises a modular structure.

6. A locally distributed speech recognition system according to one of the preceding claims, wherein the preliminary recognition means and the interpreting means (10) comprise a means for converting different codes into each other.

7. A locally distributed speech recognition system according to one of the preceding claims, wherein the preliminary recognition means and the interpreting means (10) comprise a storage means, to store coded phonemes for further processing.

8. A locally distributed speech recognition system according to one of the preceding claims, wherein said transmission facility (7) uses a teleservice.

9. A locally distributed speech recognition system according to claim 8, wherein said teleservice is a short message system (SMS) or a telefax.

10. A locally distributed speech recognition system according to one of the preceding claims, wherein the interpreting means (10) is directly connected to or included in a network.

11. A locally distributed speech recognition system according to one of the preceding claims, wherein the interpreting means (10) is delocalised in the network.

12. A locally distributed speech recognition system according to one of the preceding claims, wherein the interpreting means (10) comprises a word recognition means (12).

13. A locally distributed speech recognition system according to one of the preceding claims, wherein the interpreting means (10) comprises a grammar recognition means (14).

14. A locally distributed speech recognition system according to one of the preceding claims, wherein the interpreting means (10) comprises a syntax recognition means (16).

15. A locally distributed speech recognition system according to one of the preceding claims, wherein the transmission facility (7) is designed to transfer the data in accordance with a transfer protocol.

16. A locally distributed speech recognition system according to one of the preceding claims, wherein the interpreting means (10) uses a discrete hidden markov model for interpreting the received coded phonemes.

17. An interpreting means for use in a locally distributed speech recognition system comprising an input for receiving digitally coded phonemes from a remote preliminary recognition means, an output for digital coded readable text, and orthography (12), grammar (14) and syntax (16) databases.

18. A mobile communication device for the use in a locally distributed speech recognition system, comprising an acoustic coupler for transferring an acoustic voice waveform into an electronic waveform, a preliminary recognising means for extracting phonemes contained in said waveform, a converting means for converting the extracted phonemes into code and a transmitting means for transmitting the code.

19. A mobile communication device according to claim 18, further comprising a digital signal processor to improve the accuracy of the recognition process.

20. A mobile communication device according to one of claims 18 to 19, further comprising means to receive data transferred from a remote interpreting means.

21. A method for operating a locally distributed speech recognition system, for the use with a transmission facility (7), comprising the steps of:
- Recognising the phonemes and intervals of the speech
- Converting the phonemes and intervals into code
- Transferring the code to a remote interpreting means
- Interpreting the code to generate digitised readable text

22. Method according to claim 21, further comprising at least one of the steps of:
- Supporting the recognising process by digitally processing the waveform of the speech input;
- Storing the code;
- Counting the phonemes;
- Limiting the number of recognised phonemes to a predetermined amount;
- Generating a short message containing the phonemes;

23. Method according to one of claims 21 to 22, further comprising the steps of:
- Transferring the digitised readable text to the user;
- Storing said digitised readable text;
- Checking and in case Rejecting the digitised readable text by the user;
- Dispatching a rejection signal
- Receiving a rejection signal
- Re-Interpreting the code to generate a different digitised readable text
- Accepting the digitised readable text by the user
- Post-Processing of an accepted digitised readable text by the user
- Storing said post-processed digitised readable text
- Dispatching said digitised readable text or said post-processed digitised readable text by the user,
- Transferring a command from the user to the interpreting means for dispatching an accepted digitised readable text to a recipient,
- Dispatching an accepted digitised readable text to a recipient,
- Receiving and storing information related to the origin of the code for improving the interpreting process,
- Receiving and storing the accepted and/or post-processed digitised readable text for enlarging the databases,
- Processing of stored data for improving the accuracy of the interpreting process.

24. A method for operating an interpreting means for the use with a transmission facility and a remote mobile communication device, comprising the steps of
- Receiving coded phonemes from said mobile communication system,
- Interpreting the code to generate digitised readable text in accordance with predetermined rules,
- Dispatching said digitised text to said mobile communication device

25. A method according to claim 24, further comprising the steps of
- Storing the code;
- Storing the digitised readable text;
- Transferring the digitised readable text;
- Checking and in case Rejecting the digitised readable text by the user,
- Storing the information related to the origin of the code;
- Receiving and storing the rejected, accepted and/or post processed digitised readable text;
- Processing of the stored data to improve the interpretation process;

26. A method according to one of the claims 21 to 25, wherein during interpretation the code is processed in accordance with orthography, grammar, and/or syntax assessment.

27. A method according to one of the claims 21 to 26, wherein the interpretation of the code is executed in accordance with orthography, grammar and syntax of a specific language selected by the user.

28. A method according to one of the claims 21 to 27, wherein the preliminary recognition means recognises vowels, consonants, intervals and probabilities.

29. A method according to one of claims 21 to 28, wherein the phoneme code is compressed prior to transmittal to the interpreting means.
